# EUROPÄISCHE PATENTSCHRIFT

(11) **EP 1 939 067 B1**
(45) Veröffentlichungstag und Bekanntmachung des Hinweises auf die Patenterteilung: **05.06.2013**
(21) Anmeldenummer: 07119558.0
(22) Anmeldetag: 30.10.2007
(51) Int. Cl.: B62D 5/04, B62D 15/02, H02K 11/00

(54) **Elektrischer Servomotor im Lenksystem eines Fahrzeugs**
Electric servo motor in the steering system of a vehicle
Servomoteur électrique d'un système de direction d'un véhicule

(30) Priorität: 28.12.2006 DE 102006061702
(43) Veröffentlichungstag der Anmeldung: 02.07.2008
(73) Patentinhaber: ROBERT BOSCH GMBH, 70442 Stuttgart (DE)
(72) Erfinder: Henke, Torsten, 71332, Waiblingen (DE)

(56) Entgegenhaltungen:
- EP-A1- 1 495 942
- DE-A1- 10 127 169
- US-B1- 6 268 669

## Beschreibung

### Stand der Technik

Die Erfindung bezieht sich auf einen elektrischen Servomotor in einem Lenksystem eines Fahrzeugs nach dem Oberbegriff des Anspruches 1.

In der DE 197 03 903 A1 wird ein Servolenksystem beschrieben, bei dem über eine Lenkwelle der vom Fahrer auf das Lenkrad vorgegebene Lenkwinkel auf ein Lenkgestänge übertragen wird, welches mit den gelenkten Rädern des Fahrzeuges verbunden ist und diesen einen Radlenkwinkel aufprägt. Zur Unterstützung des vom Fahrer vorgegebenen Handlenkmomentes ist ein elektrischer Servomotor vorgesehen, der ein unterstützendes Moment über ein Getriebe in das Lenksystem einspeist.

Des Weiteren ist ein Lenkwinkelsensor an der Lenkwelle zur Detektierung der aktuellen Drehwinkellage der Lenkwelle angeordnet. Die Lenkwinkelsensorik umfasst einen Magneten, der drehfest an der Stirnseite mit der Lenkwelle gekoppelt ist, sowie einen Magnetfeldsensor, der im Gehäuse des Getriebes zwischen Lenkwelle und Lenkgestänge angeordnet ist. Über den Magnetfeldsensor wird die Magnetfeldänderung gemessen, die von dem sich drehenden Magneten erzeugt wird. Aus der Magnetfeldänderung kann auf den aktuellen Drehwinkel geschlossen werden.

Die DE 101 27 169 A1 offenbart eine gattungsgemäβe Servolenkvorrichtung mit einem elektrischen Servomotor, der ein die Lenkbewegung des Fahrers unterstützendes Servomoment bereitstellt. Die Servolenkvorrichtung umfasst neben dem Servomotor auch ein integriertes Steuergerät zur Regelung bzw. Steuerung des Servomotors, wobei das Steuergerät eine Bauelemente-Trägerplatte beinhaltet sowie einen Magnetsensor zur Bestimmung der aktuellen Drehwinkellage der Rotorwelle des Servomotors Der Magnetsensor ist in das Gehäuse der Servolenkvorrichtung integriert.

Eine vergleichbare Servolenkvorrichtung ist auch aus der US 6,268,669 B1 bekannt. Die EP 1 495 942 A1 zeigt eine elektrische Servolenkvorrichtung, bei der ein Magnetfeldsensor außerhalb des Gehäuses der Servolenkvorrichtung angeordnet ist.

### Offenbarung der Erfindung

Von diesem Stand der Technik ausgehend liegt der Erfindung die Aufgabe zugrunde, ein kompakt bauendes Lenksystem in einem Fahrzeug mit elektrischem Servomotor anzugeben.

Diese Aufgabe wird erfindungsgemäß mit den Merkmalen des Anspruches 1 gelöst. Die Unteransprüche geben zweckmäßige Weiterbildungen an.

Erfindungsgemäß ist das Lenksystem mit einem elektrischen Servomotor ausgestattet, über den ein auf das Lenkgestänge wirkendes Unterstützungsmoment aufzubringen ist. Dem Servomotor ist außerdem ein Steuergerät zugeordnet, über das die motorischen Funktionen gesteuert werden. Dieses Steuergerät umfasst eine Bauelemente-Trägerplatte, auf der die elektronischen Komponenten angeordnet sind und außerdem auch ein Magnetfeldsensor zur Bestimmung der aktuellen Drehwinkellage ein Magnetsensor zur Bestimmung der aktuellen Drehwinkellage der Rotorwelle des Servomotors bzw. einer mit der Rotorwelle gekoppelten Abtriebswelle. Die Bauelemente-Trägerplatte einschließlich des darauf angeordneten Magnetfeldsensors ist - teilweise oder vollständig - in das Gehäuse des Servomotors integriert. Bei der Bauelemente-Trägerplatte kann es sich beispielsweise um eine Leiterplatte handeln.

Durch die Integration des Magnetsensors auf die Bauelemente-Trägerplatte und den Einschub der Bauelemente-Trägerplatte in das Gehäuse des Servomotors wird zum einen eine bauliche Vereinfachung erreicht, da keine zusätzlichen Halte- und Anschlusseinrichtungen für den Magnetfeldsensor erforderlich sind; vielmehr erfolgt der elektrische Anschluss unmittelbar über die Bauelemente-Trägerplatte, auf der der Sensor angeordnet ist. Die Halterung wird an der Bauelemente-Trägerplatte durchgeführt, die in hierfür vorgesehenen Halteeinrichtungen im Gehäuse des Servomotors gehalten ist.

Eine konstruktive Vereinfachung ist darin zu sehen, dass der Magnetfeldsensor bereits vor dem Einbau der Bauelemente-Trägerplatte in das Gehäuse auf die Bauelemente-Trägerplatte aufgebracht werden kann. Bauelemente-Trägerplatte und Magnetfeldsensor bilden ein vorgefertigtes Modul. Weiterhin ist vorteilhaft, dass sich der Magnetsensor innerhalb des Gehäuses des Servomotors befindet, wodurch der Sensor mechanisch und gegen Feuchtigkeit geschützt ist.

Auch die Bauelemente-Trägerplatte kann vollständig in das Gehäuse integriert werden. Gegebenenfalls kommt aber auch nur ein teilweises Einsetzen in das Gehäuse in Betracht, wobei ein Abschnitt der Bauelemente-Trägerplatte unmittelbar auf die Außenseite des Gehäuses aufgesetzt ist.

Gemäß einer bevorzugten Ausführung ist der Magnetfeldsensor radial versetzt zu einem drehfest mit der Welle umlaufenden Magneten angeordnet. Um dies zu realisieren, kann es zweckmäßig sein, einen Abschnitt oder auch die gesamte Bauelemente-Trägerplatte radial in das Gehäuse einzusetzen, wobei es gegebenenfalls auch ausreichend sein kann, die Bauelemente-Trägerplatte axial bzw. achsparallel zu der Welle zu positionieren und lediglich den Magnetfeldsensor, der an der Bauelemente-Trägerplatte gehalten ist, in radial außerhalb des umlaufenden Magneten sitzender Position anzuordnen. Hierbei kommt sowohl die Ausführung in Betracht, in der der Sensor ohne axialen Versatz unmittelbar radial außerhalb des rotierenden Magneten angeordnet ist als auch die Variante mit radialem Versatz, welche den Vorteil hat, dass eine radiale Überschneidung zwischen dem umlaufenden Magneten und dem Magnetfeldsensor realisierbar ist. Gegebenenfalls ist auch ein ausschließlich axialer Versatz ohne radialem Versatz möglich, in der der Sensor unmittelbar an der axialen Stirnseite des umlaufenden Magneten angeordnet ist.

Der Magnet kann sowohl unmittelbar auf der Rotorwelle aufsitzen als auch auf einer Abtriebswelle, die über ein Getriebe mit der Rotorwelle drehgekoppelt ist und am Gehäuse des Servomotors angeordnet ist. Für den Fall, dass der Magnet an der Abtriebswelle positioniert ist, sitzt der Magnetfeldsensor nach dem Einführen in das Gehäuse zweckmäßig zwischen dem Stator und dem Getriebe.

Gemäß einer weiteren vorteilhaften Ausführung ist die Bauelemente-Trägerplatte L-förmig mit einem achsparallelen Abschnitt und einem radialen Abschnitt ausgeführt, wobei der Magnetfeldsensor zweckmäßig an dem radialen Abschnitt der Bauelemente-Trägerplatte sitzt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems eines Kraftfahrzeugs, wobei dem Lenksystem ein elektrischer Servomotor zum Erzeugen eines Unterstützungsmomentes zugeordnet ist,
- Fig. 2: eine perspektivische Ansicht des elektrischen Servomotors,
- Fig. 3: in schematischer Darstellung eine von dem elektrischen Motor anzutreibende Welle am Gehäuse des Servomotors, wobei an der Welle ein Magnetpolrad aufsitzt, dessen Magnetfelder von Magnetsensoren detektiert werden, die auf einer Bauelemente-Trägerplatte sitzen, welche Bestandteil eines Steuergerätes im Servomotor ist,
- Fig. 4: der Servomotor in einer schematisierten Seitenansicht mit einer Darstellung des Magnetpolrades und der in das Gehäuse des Servomotors integrierten Bauelemente-Trägerplatte, auf der die Magnetsensoren mit radialem und axialem Versatz zum Magnetpolrad angeordnet sind,
- Fig. 5: eine Fig. 3 entsprechende Darstellung, jedoch mit ausschließlich radialem Versatz der Magnetsensoren in Bezug auf das Magnetpolrad,
- Fig. 6: der Servomotor aus Fig. 5 in Seitenansicht,
- Fig. 7: der Servomotor in noch einer weiteren Ausführung, bei der die Bauelemente-Trägerplatte mit den darauf angeordneten elektronischen Komponenten L-förmig ausgebildet ist, wobei der Magnetfeldsensor an dem radialen Schenkel der Bauelemente-Trägerplatte angeordnet ist,
- Fig. 8: der Servomotor des Ausführungsbeispieles nach Fig. 7 in einer Gesamtdarstellung.

In den Figuren sind gleiche Bauteile mit gleichen Bezugszeichen versehen.

### Ausführungsform(en) der Erfindung

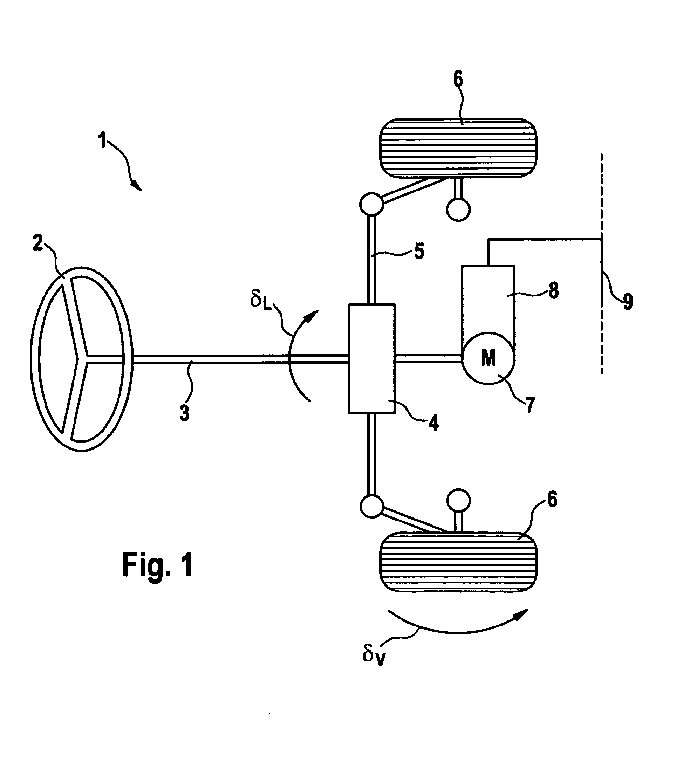

Das in Fig. 1 dargestellte Lenksystem 1 in einem Fahrzeug umfasst ein Lenkrad 2, über das der Fahrer einen gewünschten Lenkwinkel δ_{L} vorgibt, welcher über eine drehfest mit dem Lenkrad 2 gekoppelte Lenkwelle 3 und ein dem Lenkrad 2 gegenüberliegendes Lenkgetriebe 4 auf ein Lenkgestänge 5 übertragen wird. Das Lenkgestänge 5 ist mit den lenkbaren Vorderrädern 6 gekoppelt und prägt diesen entsprechend der Vorgabe des Lenkwinkels δ_{L} einen Radlenkwinkel δ_{V} auf.

Dem Lenksystem 1 ist ein elektrischer Servomotor 7 zugeordnet, über den ein unterstützendes Moment in das Lenksystem 1 zur Unterstützung des vom Fahrer erzeugten Handmomentes eingespeist werden kann. Der Servomotor 7 ist mit dem Lenkgetriebe 4 drehgekoppelt. Dem Servomotor 7 ist ein Steuergerät zugeordnet, welches zur Regelung bzw. Steuerung des Servomotors eingesetzt wird. Das Steuergerät kommuniziert mit einem CAN-Bus 9, über den Daten mit weiteren Steuergeräten im Kraftfahrzeug ausgetauscht werden.

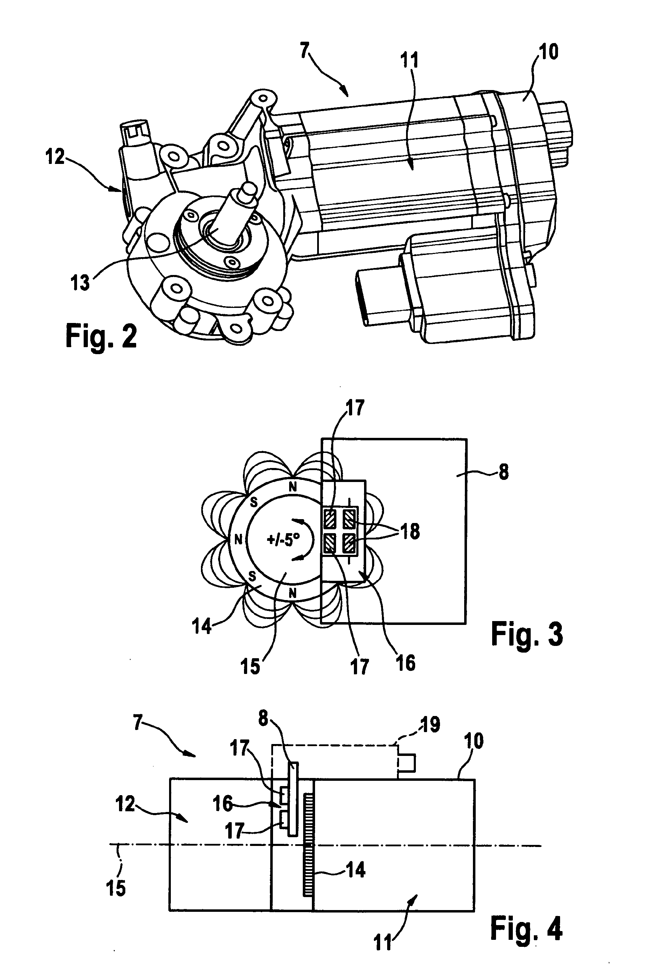

Wie Fig. 2 zu entnehmen, weist der elektrische Servomotor 7 ein Gehäuse 10 auf, in welchem der Elektromotor 11 untergebracht ist, dessen nicht näher bezeichnete Rotorwelle 15 über ein Getriebe 12 eine Abtriebswelle 13 antreibt. Dabei ist das Steuergerät axial benachbart zum Gehäuse 10 angeordnet und ragt mit einer Metallplatte, die Teil einer Bauelemente-Trägerplatte 8 ist, radial zwischen den Elektromotor 11 und das Getriebe 12. Der Elektromotor 11 ist als Asynchronmaschine ausgebildet, deren Leistung mit hoher Güte geregelt wird. Hierzu wird der Elektromotor 11 über das abgegebene Drehmoment angesteuert.

Wie den Fig. 3 und 4 zu entnehmen, sitzt auf der Rotorwelle 15 des Servomotors 7 ein Magnetpolrad 14 auf, welches über den Umfang verteilt mehrere Magnetpole aufweist, so dass beim Umlauf von Rotorwelle 15 und Magnetpolrad 14 bezogen auf das Gehäuse ein sich permanent wechselndes Magnetfeld erzeugt wird. Zur Detektierung des von dem Magnetpolrad 14 erzeugten Magnetfeldes ist eine Sensorik 16 mit Magnetsensoren 17 auf einer Bauelemente-Trägerplatte 8 des Steuergerätes angeordnet. Die Sensorik 16 umfasst Sensorauswerteeinheiten 18, die den Magnetsensoren 17 zur Auswertung der detektierten Signale zugeordnet sind. Im Ausführungsbeispiel sind zwei Magnetsensoren 17 und zwei zugeordnete Sensorauswerteeinheiten 18 vorgesehen. Die gesamte Sensorik 16 sitzt auf der Bauelemente-Trägerplatte 8 des Steuergerätes. Mittels LTCC-Technik (Low Temperature Cofired Ceramics) können mehrlagige LTCC-Schaltungen auf der Basis von gesinterten Keramikträgern als Leiterplatinen 84 auf der Bauelemente-Trägerplatte 8 angeordnet sein. Auch die Magnetsensoren 17 einschließlich der Sensorauswerteeinheiten 18 sind als technische und elektronische Komponenten auf die Bauelemente-Trägerplatte 8 aufgebracht. Dabei können die Magnetsensoren 17 beispielsweise direkt auf den Keramikträgern mit den LTCC-Schaltungen angeordnet sein. Im Beispiel der L-förmigen Bauelemente-Trägerplatte 8 sind die Leiterplatinen - insbesondere die plattenförmigen LTCC-Schaltungen - sowohl quer zur Rotorwelle 15 als auch parallel zur Rotorwelle 15 angeordnet.

Mittels der Sensorik 16 kann die aktuelle Drehwinkellage der Welle 13 durch Messung des umlaufenden Magnetfeldes, welches vom Magnetpolrad 14 erzeugt wird, ermittelt werden. Die Messgenauigkeit liegt bei unter 5°. Die aktuelle, ermittelte Drehwinkellage der Welle lässt Rückschlüsse zu auf den aktuellen Drehwinkel im Lenksystem, ungeachtet dessen, ob das Magnetpolrad 14 an der Abtriebswelle 13 oder der Rotorwelle des Elektromotors 11 drehfest angeordnet ist. Aufgrund der festen kinematischen Kopplung über das Getriebe 12 und der weiteren kinematischen Kopplung zwischen der Abtriebswelle 13 und dem Lenkgetriebe im Lenksystem kann bei bekannten Übersetzungsverhältnissen die gemessene Drehwinkellage im Servomotor 7 in den aktuellen Lenkwinkel im Lenksystem umgerechnet werden.

Im Ausführungsbeispiel nach den Fig. 3 und 4 sind die Magnetsensoren 17 sowohl mit radialem als auch mit axialem Versatz in Bezug auf das Magnetpolrad 14 angeordnet. Hierzu wird, wie insbesondere Fig. 4 zu entnehmen, die Bauelemente-Trägerplatte 8 des Steuergerätes in das Gehäuse 10 radial eingesetzt, derart, dass die Magnetsensoren 17 vollständig im Gehäuse 10 aufgenommen sind. Die Magnetsensoren 17 sind dem Magnetpolrad 14 axial vorgelagert, sie weisen jedoch zusätzlich gegenüber der Drehachse des Magnetpolrades 14 einen radialen Versatz auf.

Wie Fig. 4 weiter zu entnehmen, kann das Magnetpolrad 14 auch auf der Rotorwelle 15 des Elektromotors 7 aufsitzen. Die Rotorwelle 15 ist nur symbolisch als Drehachse eingetragen. Ein Abschnitt der Bauelemente-Trägerplatte 8 überragt, wie Fig. 4 zu entnehmen, den Außenmantel des Gehäuses 10 und ist in einer Aufnahme- und Anschlusseinrichtung 19 aufgenommen. Die Aufnahme- und Anschlusseinrichtung 19 ist zweckmäßig fester Bestandteil des Gehäuses 10 des elektrischen Servomotors 7; sie kann gegebenenfalls aber auch separat vom Gehäuse 10 ausgebildet sein. Außerdem ist es möglich, die Bauelemente-Trägerplatte 8 auch vollständig in das Gehäuse 10 einzusetzen.

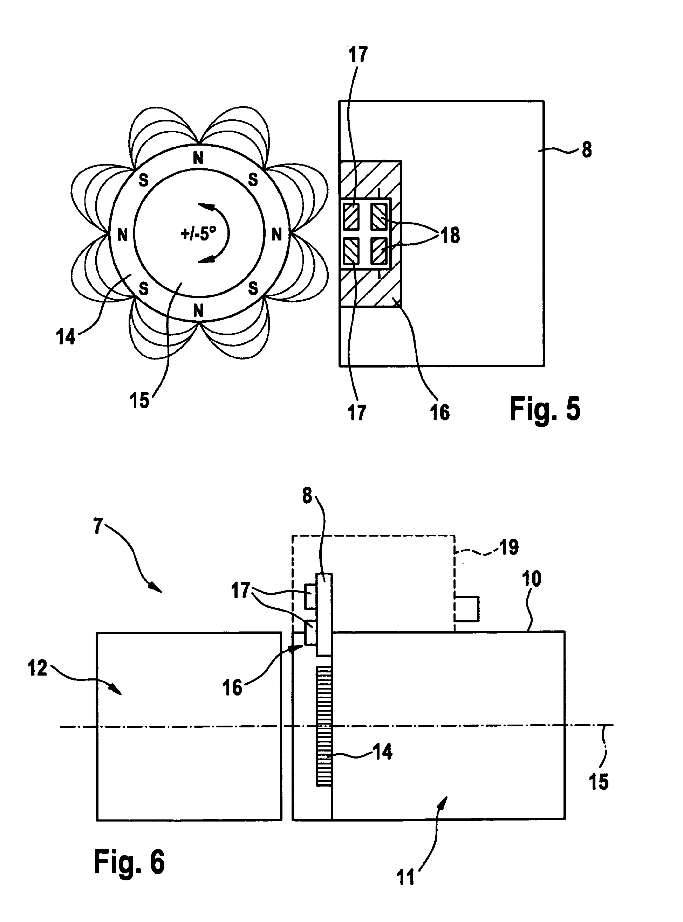

In den Fig. 5 und 6 ist ein weiteres Ausführungsbeispiel für einen elektrischen Servomotor 7 für ein Lenksystem dargestellt, wobei für identische Bauteile und Funktionalitäten auf die Beschreibung zum vorhergehenden Ausführungsbeispiel gemäß den Fig. 3 und 4 verwiesen wird.

Ein Unterschied liegt in der Relativpositionierung der Bauelemente-Trägerplatte 8 in Bezug auf das Magnetpolrad 14. Im Ausführungsbeispiel nach Fig. 5 und 6 ist die Bauelemente-Trägerplatte 8 einschließlich der darauf angeordneten Magnetsensoren 17 ausschließlich mit radialem Versatz gegenüber dem Magnetpolrad 14 positioniert. Die Bauelemente-Trägerplatte 8 mit den Magnetsensoren 17 weist jedoch keinen axialen Versatz gegenüber dem Magnetpolrad 14 auf.

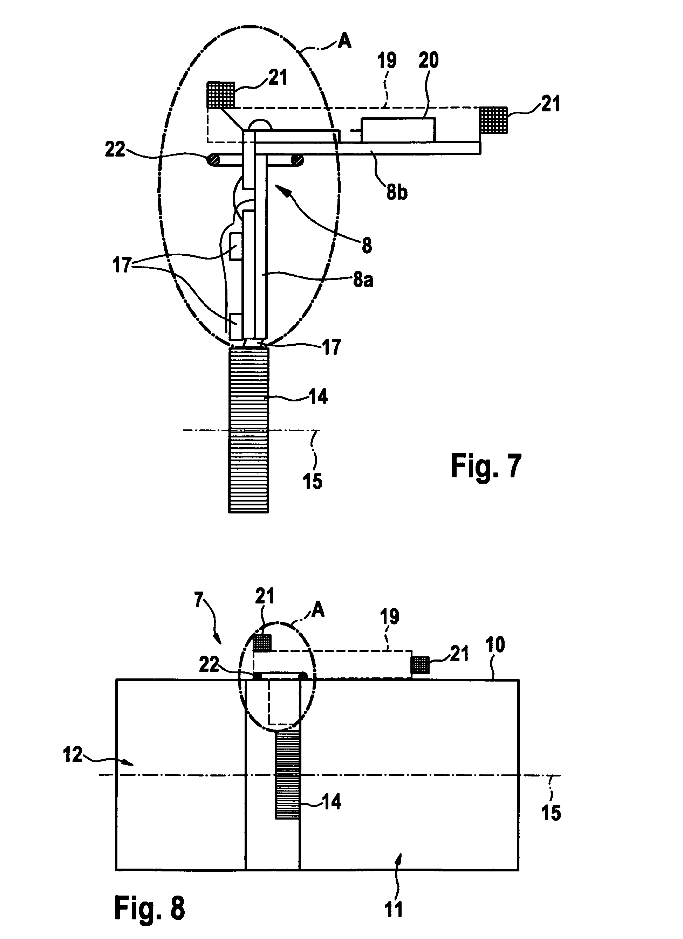

In den Fig. 7 und 8 ist noch ein weiteres Ausführungsbeispiel dargestellt, wobei zur besseren Verständlichkeit das Detail "A" sowohl in Fig. 7 als auch in Fig. 8 gekennzeichnet ist. Im Unterschied zu den vorhergehenden Ausführungsbeispielen ist die Bauelemente-Trägerplatte 8 L-förmig ausgebildet und weist einen radialen Schenkel 8a und einen achsparallelen Schenkel 8b auf. Der radiale Schenkel 8a ist dem Magnetpolrad 14, welches drehfest mit der Rotorwelle 15 gekoppelt ist, unmittelbar und ohne axialen Versatz vorgelagert. Der achsparallele Abschnitt 8b liegt in der Zusammenbauposition (Fig. 8) in der Aufnahme- und Anschlusseinrichtung 19, die zweckmäßig als Bestandteil des Gehäuses 10 ausgebildet ist. Dabei sind auf der Bauelemente-Trägerplatte 8 mindestens zwei Leiterplatinen angeordnet, die beispielsweise als LTCC-Schaltungen auf Keramikträgern ausgebildet sind. Eine erste Leiterplatine ist axial zwischen dem Servomotor 7 und dem Getriebe 12 quer zur Rotorwelle 15 angeordnet, eine zweite Leiterplatine benachbart zum Servomotor 7 und dem Getriebe 12 entlang der Rotorwelle 15. Wie Fig. 7 zu entnehmen, sind die Sensorelemente der Magnetsensoren 17 entweder an der radialen Stirnseite des radialen Abschnittes 8a der Bauelemente-Trägerplatte 8 angeordnet und/oder an der axialen Bauelemente-Trägerplattenoberfläche des radialen Abschnittes 8a. In beiden Fällen befinden sich aber die Magnetsensoren 17 in radialer Position bezogen auf das Magnetpolrad 14.

Zur Abdichtung, insbesondere zur Verhinderung eines Flüssigkeitseintrittes, kann ein ringförmiges Dichtelement 22 vorgesehen sein, welches für einen sicheren Dichtsitz der Bauelemente-Trägerplatte 8 im Gehäuse 10 sorgt. An der gehäuseseitigen Aufnahme und Anschlusseinrichtung 19 können zudem Anschlusselemente 21 vorgesehen sein, beispielsweise Stecker, über die die Stromversorgung und der Datenaustausch hergestellt wird.

## Patentansprüche

1. Elektrischer Servomotor in einem Lenksystem eines Fahrzeugs, wobei das Lenksystem (1) eine Lenkwelle (3) umfasst, über die ein vom Fahrer vorgegebener Lenkwinkel (δ_{L}) auf ein Lenkgestänge (5) zur Einstellung eines Radlenkwinkels (δᵥ) an den gelenkten Rädern (6) des Fahrzeugs übertragbar ist, und über den elektrischen Servomotor (7) ein auf das Lenkgestänge (5) wirkendes Unterstützungsmoment erzeugbar ist, mit einem Steuergerät (80) zur Regelung oder Steuerung des Servomotors (7), wobei das Steuergerät (80) eine Bauelemente-Trägerplatte (8) umfasst und ein Magnetsensor zur Bestimmung der aktuellen Drehwinkellage der Rotorwelle (15) des Servomotors (7) oder einer von der Rotorwelle (15) angetriebenen Abtriebswelle (13) auf der Bauelemente-Trägerplatte (8) des Steuergeräts (80) angeordnet ist, und die Bauelemente-Trägerplatte (8) einschließlich Magnetfeldsensor in das Gehäuse (10) des Servomotors (7) integriert ist,
**dadurch gekennzeichnet,**
**dass** auf der Bauelemente-Trägerplatte (8) mindestens eine Leiterplatine (84) angeordnet ist, die als LTCC-Schaltungen (81) auf Keramikträgern ausgebildet ist, und dass Magnetsensoren (17) des Magnetfeldsensors direkt auf der Bauelemente-Trägerplatte (8) angeordnet sind.

2. Servomotor nach Anspruch 1,
**dadurch gekennzeichnet,**
**dass** der Magnetsensor radial oder axial versetzt zu einem drehfest mit der Rotorwelle (15) umlaufenden Magneten angeordnet ist.

3. Servomotor nach Anspruch 2,
**dadurch gekennzeichnet,**
**dass** der Magnetfeldsensor sowohl mit radialem als auch mit axialem Versatz zu dem Magneten angeordnet ist.

4. Servomotor nach einem der Ansprüche 2 oder 3,
**dadurch gekennzeichnet,**
**dass** der Magnetfeldsensor im Gehäuse (10) zwischen dem Elektromotor (11) und einem Getriebe (12) positioniert ist, und insbesondere der Magnet auf der Rotorwelle (15) des Elektromotors (11) sitzt.

5. Servomotor nach einem der Ansprüche 2 bis 4,
**dadurch gekennzeichnet,**
**dass** der Magnet auf der Abtriebswelle (13) sitzt, die über ein Getriebe (12) mit der Rotorwelle (15) drehgekoppelt ist.

6. Servomotor nach einem der Ansprüche 1 bis 5,
**dadurch gekennzeichnet,**
**dass** die Bauelemente-Trägerplatte (8) L-förmig mit einem radialen Schenkel (8a) und einem achsparallelen Schenkel (8b) ausgebildet ist.

7. Servomotor nach einem der Ansprüche 1 bis 6,
**dadurch gekennzeichnet,**
**dass** der Magnetfeldsensor auf dem radialen Abschnitt (8a) der Leiterplatine angeordnet ist.

8. Servomotor nach einem der Ansprüche 1 bis 7,
**dadurch gekennzeichnet,**
**dass** der Magnet als Magnetpolrad (14) mit mindestens vier Polwechseln entlang dessen Umfangs ausgebildet ist.

9. Servomotor nach einem der Ansprüche 1 bis 8,
**dadurch gekennzeichnet**,
die Bauelemente-Trägerplatte (8) eine Metallplatte aufweist, die zwischen den Elektromotor (11) und das Getriebe (12) ragt, und die im Steuergerät (80) generierte Wärme an das Gehäuse (10) des Servomotors (7) abführt.

## Claims

1. Electric servomotor in a steering system of a vehicle, wherein the steering system (1) comprises a steering shaft (3) by means of which a steering angle (δ_{L}) which is predefined by the driver can be transmitted to a steering linkage (5) for setting a wheel steering angle (δᵥ) on the steered wheels (6) of the vehicle, and an assistance torque which acts on the steering linkage (5) can be generated by means of the electric servomotor (7), having a controller (80) for closed-loop control or open-loop control of the servomotor (7), wherein the controller (80) comprises a component support plate (8), and a magnetic field sensor for determining the current rotation angle position of the rotor shaft (15) of the servomotor (7) or an output drive shaft (13), which is driven by the rotor shaft (15), is arranged on the component support plate (8) of the controller (80), and the component support plate (8), including the magnetic field sensor, is integrated in the housing (10) of the servomotor (7),
**characterized**
**in that** at least one printed circuit board (84) is arranged on the component support plate (8), the said printed circuit board being in the form of LTCC circuits (81) on ceramic supports, and in that magnet sensors (17) of the magnetic field sensor are arranged directly on the component support plate (8).

2. Servomotor according to Claim 1,
**characterized**
**in that** the magnet sensor is arranged radially or axially offset to a magnet which rotates in a rotationally fixed manner with the rotor shaft (15).

3. Servomotor according to Claim 2,
**characterized**
**in that** the magnetic field sensor is arranged both with a radial and with an axial offset in relation to the magnet.

4. Servomotor according to either of Claims 2 and 3,
**characterized**
**in that** the magnetic field sensor is positioned between the electric motor (11) and a gear mechanism (12) in the housing (10), and, in particular, the magnet sits on the rotor shaft (15) of the electric motor (11).

5. Servomotor according to one of Claims 2 to 4,
**characterized**
**in that** the magnet sits on the output drive shaft (13) which is rotationally coupled to the rotor shaft (15) by means of a gear mechanism (12).

6. Servomotor according to one of Claims 1 to 5,
**characterized**
**in that** the component support plate (8) is of L-shaped design with a radial limb (8a) and an axially parallel limb (8b).

7. Servomotor according to one of Claims 1 to 6,
**characterized**
**in that** the magnetic field sensor is arranged on the radial section (8a) of the printed circuit board.

8. Servomotor according to one of Claims 1 to 7,
**characterized**
**in that** the magnet is in the form of a magnetic pole wheel (14) with at least four pole changes along its circumference.

9. Servomotor according to one of Claims 1 to 8,
**characterized**
**in that** the component support plate (8) has a metal plate which projects between the electric motor (11) and the gear mechanism (12) and dissipates the heat, which is generated in the controller (80), to the housing (10) of the servomotor (7).

## Revendications

1. Servomoteur électrique d'un système de direction d'un véhicule, dans lequel le système de direction (1) comprend un arbre de direction (3), par le biais duquel un angle de braquage (δ_{L}) prédéfini par le conducteur peut être transmis à une timonerie de direction (5) pour l'ajustement d'un angle de braquage des roues (δᵥ) au niveau des roues dirigées (6) du véhicule, et un servocouple agissant sur la timonerie de direction (5) pouvant être produit par le biais du servomoteur électrique (7), avec un appareil de commande (80) pour la régulation ou la commande du servomoteur (7), l'appareil de commande (80) comprenant un plateau support de composants (8) et un capteur de champ magnétique pour déterminer la position de l'angle de rotation actuelle de l'arbre de rotor (15) du servomoteur (7) ou d'un arbre de sortie (13) entraîné par l'arbre de rotor (15) étant disposé sur le plateau support de composants (8) de l'appareil de commande (80) et le plateau support de composants (8) y compris le capteur de champ magnétique étant intégré dans le boîtier (10) du servomoteur (7),
**caractérisé en ce**
**qu'**au moins un carte à circuits imprimés (84) est disposée sur le plateau support de composants (8), laquelle est réalisée sous forme de circuits LTCC (81) sur des supports en céramique, et en ce que des capteurs magnétiques (17) du capteur de champ magnétique sont disposés directement sur le plateau support de composants (8).

2. Servomoteur selon la revendication 1,
**caractérisé en ce que**
le capteur magnétique est disposé de manière décalée radialement ou axialement par rapport à un aimant tournant de manière solidaire en rotation avec l'arbre de rotor (15).

3. Servomoteur selon la revendication 2,
**caractérisé en ce que**
le capteur de champ magnétique est disposé avec un décalage radial et axial par rapport à l'aimant.

4. Servomoteur selon l'une quelconque des revendications 2 ou 3,
**caractérisé en ce que**
le capteur de champ magnétique est positionné dans le boîtier (10) entre le moteur électrique (11) et une transmission (12), et en particulier l'aimant repose sur l'arbre de rotor (15) du moteur électrique (11).

5. Servomoteur selon l'une quelconque des revendications 2 à 4,
**caractérisé en ce que**
l'aimant repose sur l'arbre de sortie (13) qui est accouplé en rotation à l'arbre de rotor (15) par le biais d'une transmission (12).

6. Servomoteur selon l'une quelconque des revendications 1 à 5,
**caractérisé en ce que**
le plateau support de composants (8) est réalisé en forme de L avec une branche radiale (8a) et une branche d'axe parallèle (8b).

7. Servomoteur selon l'une quelconque des revendications 1 à 6,
**caractérisé en ce que**
le capteur de champ magnétique est disposé sur la portion radiale (8a) de la carte à circuits imprimés.

8. Servomoteur selon l'une quelconque des revendications 1 à 7,
**caractérisé en ce que**
l'aimant est réalisé sous forme de roue polaire aimantée (14) avec au moins quatre changements de pôles le long de sa périphérie.

9. Servomoteur selon l'une quelconque des revendications 1 à 8,
**caractérisé en ce que**
le plateau support de composants (8) présente un plateau métallique, qui fait saillie entre le moteur électrique (11) et la transmission (12), et qui évacue la chaleur générée dans l'appareil de commande (80) au niveau du boîtier (10) du servomoteur (7).
